(19) Europäisches Patentamt
European Patent Office
Office européen des brevets

(11) Numéro de publication: **0 000 685**
**B1**

(12) **FASCICULE DE BREVET EUROPEEN**

(45) Date de publication du fascicule du brevet: **15.09.82**

(51) Int. Cl.³: **A 47 J 31/40**

(21) Numéro de dépôt: **78430005.5**

(22) Date de dépôt: **12.07.78**

(54) **Dispositif automatique pour l'infusion de doses de café express ou autres boissons similaires.**

(30) Priorité: **18.07.77 FR 7722992**

(43) Date de publication de la demande:
**07.02.79 Bulletin 79/3**

(45) Mention de la délivrance du brevet:
**15.09.82 Bulletin 82/37**

(84) Etats contractants désignés:
**BE CH DE NL**

(56) Documents cités:
**DE - C - 608 395**
**FR - A - 539 887**
**FR - A - 550 958**
**FR - A - 1 145 439**
**FR - A - 1 373 832**
**FR - A - 1 391 610**
**FR - A - 2 042 844**
**FR - A - 2 119 113**
**FR - A - 2 267 073**
**US - A - 3 369 478**

(73) Titulaire: **Levi, Mario**
**210 Boulevard de la Madeleine**
**F-06000 Nice (FR)**

(72) Inventeur: **Levi, Mario**
**210 Boulevard de la Madeleine**
**F-06000 Nice (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**EP 0 000 685 B1**

# Dispositif automatique pour l'infusion de doses de café express ou autres boissons similaires

La présente invention a trait à un dispositif automatique pour l'infusion de café express ou autres boissons similaires dans lequel un tiroir disposé au-dessus d'un cylindre peut occuper deux positions, le tiroir présentant un alésage d'admission de la dose de mouture traversant l'épaisseur du tiroir et pouvant être disposé dans une position coaxialement au cylindre, un piston étant monté coulissant dans ce dernier.

Il existe déjà des machines à café complètement automatiques, à jetons, monnaie ou de comptoir, mais elles posent des problèmes de maintenance vu leur complexité.

Elles nécessitent, soit des motoréducteurs planétaires ou à vis sans fin pour le positionnement, soit des centrales hydrauliques à huile dont la moindre fuite dégage une odeur désagréable dans l'établissement.

Il existe aussi un autre problème jusqu'à présent non résolu ou mal résolu, celui du tassage de la dose de mouture de café pour former une galette sur le filtre.

En effet, la pression de tassage est très importante, trop faible: l'eau chaude qui est envoyée au filtre pour l'infusion du café progresse en tourbillons dans la galette, se crée des parcours favorisés (cheminées) et n'imbibant qu'une partie de la galette de mouture ne peut extraire en totalité les éléments aromatiques du café; trop forte: l'eau rencontrant une masse très compacte passe difficilement au goutte à goutte, perfore la galette créant une cheminée, n'infuse qu'une partie de la dose de mouture et donne un café médiocre; et, dans les cas extrêmes, l'eau ne pouvant passer au travers de la galette, la machine s'arrête.

En outre dans les différents types de machines automatiques, sont prévues plusieurs opérations différentes dans lesquelles s'effectuent successivement: la réception de la dose de mouture, le tassage pour former une galette, l'infusion, l'expulsion de la galette épuisée, le nettoyage du filtre ... ou dans certaines conceptions, après l'infusion, la galette épuisée demeure sur le filtre jusqu'au cycle suivant qui peut avoir lieu plusieurs heures après, avec tous les inconvénients qui en découlent ...

Dans d'autres conceptions, il est nécessaire d'utiliser des doses de mouture pour former le support de la galette qui sera infusée, doses de mouture qui seront évacuées sans être utilisées pour faire du café.

La suite de ces différentes opérations requiert des mécanismes, des transmissions complexes, hydrauliques, électriques mécaniques, entraînant des temps morts importants (parfois 10 secondes par cycle d'infusion).

Diverses réalisations utilisant un tiroir, par exemple le brevet FR—A—2 119 113 comportent un piston d'infusion qui doit quitter son cylindre, traverser le tiroir et rentrer dans un cylindre opposé. Ce genre de montage n'est pas envisageable sur du matériel de qualité; la durée de vie des garnitures d'étanchéité n'étant pas suffisante.

La présente invention est caractérisée en ce que, en position de repos du tiroir l'alésage qui le traverse est coaxial au cylindre pour l'admission de la dose de mouture sur le piston en position basse. Le tiroir se déplace alors en position de travail, la chambre d'infusion disposée sur sa face inférieure devient coaxiale au piston qui se déplace à ce moment en position haute. Lorsque sa surface supérieure affleure la surface inférieure du tiroir, l'eau chaude est injectée dans la chambre d'infusion.

Le piston reste dans cette position pendant l'infusion et le retour du tiroir à sa position de repos, ce dernier emporte la galette de marc éjectée, le piston retourne à sa position basse pour permettre le démarrage d'un nouvaeu cycle.

La chambre d'infusion est alimentée de bas en haut ce qui permet une meilleure extraction des arômes du café, mais pourrait également se faire classiquement de haut en bas dans une autre réalisation non représentée.

L'éjection du marc s'effectue en démoulant la galette de marc de café épuisé par lavage de la chambre d'infusion à contre-courant; mais pourrait aussi se faire, dans une réalisation non représentée de manière à évacuer des galettes de marc de café épuisé, sèches.

Le tiroir jouant le rôle de distributeur: d'entrée d'infusion, de sortie du café infusé, de dégagement de l'eau d'évacuation du marc épuisé; les portées d'étanchéité qui lui sont appliquées servent également de guidage en translation.

Un autre problème typique au procédé selon le FR—A—2 119 113 est qu'il nécessite trop d'électrovannes (5 dans le cas du brevet cité plus haut) qui sont nécessaires pour le déplacement du vérin des pistons et de l'admission d'eau chaude.

La commande successive de ces électrovannes impose soit une série de microrupteurs actionnés l'un après l'autre, soit un programmateur qui a l'inconvénient de ralentir le mécanisme puisqu'il faut prévoir des temps supérieurs aux divers mouvements pour ne pas risquer l'aléa.

Ces problèmes sont résolus dans la présente invention:

Le piston d'infusion parcourt une faible course dans son cylindre et ne sort pas, deux électrovannes fonctionnant à l'eau froide suffisent à l'ensemble du cycle, la distribution de l'eau chaude d'infusion est réalisée par le tiroir et un clapet largement dimensionné moins sensible au calcaire qu'une électrovanne.

Un seul microrupteur suffit au fonctionnement du dispositif et sert uniquement à déterminer lorsque le mécanisme est en position de repos.

D'autres dispositifs de types connus complètent le groupe:

Des organes moteurs pour déplacer la pièce où se trouve la chambre d'infusion, un vérin dans le cas du toiroir ou tout autre système d'avance dans le cas d'un autre mouvement.

Un dispositif à double piston, montée et descente, pour le dispositif de réception mouture, de formation et maintien de la galette pendant l'infusion.

Des dispositifs de dosage d'eau et de mouture de café font aussi partie des accessoires nécessaires à un fonctionnement entièrement automatique du groupe.

La simplicité des mouvements alternatifs par vérin ne nécessitant pas de butées de fin de course, ni de positionnement, procure une très grande rapidité de manoeuvre (moins de 3 secondes par cycle d'infusion).

D'autre part, le vérin commandé par deux électrovannes et le tiroir faisant lui-même office de distributeur hydraulique permet de simplifier le circuit hydraulique et le schéma électrique; de plus cette conception supprime l'emploi d'électrovanne sur le circuit eau chaude, source d'entartrage et de pannes typiques à ce genre de machines.

Le principal avantage de la présente invention consiste dans une réalisation rationnelle des divers organes, sans mécanisme complexe, ce qui réduit les risques d'incidents, de plus aucune trace de marc de café épuisé ne subsiste dans la chambre d'infusion, ni sur le filtre, ni sur le piston tassoir, excluant toutes altérations du goût et odeurs désagréables.

D'autres objectifs et avantages de la présente invention ressortiront plus complètement de la description détaillée suivant qui concerne une forme de réalisation préférée mais non exclusive et qui se réfère aux figures jointes dans lesquelles:

La fig. 1 est une coupe schématique d'un groupe automatique conforme à la présente invention, en position repos,

La fig. 2 est une figure analogue à la fig. 1 mais en position travail.

La fig. 3 est une vue de dessus, le couvercle 6 ôté, tiroir 7 en position repos avec des écorchés montrant la disposition des différents distributeurs prévus pour le passage de l'eau chaude d'infusion, de sortie du café infusé et d'eau d'évacuation du marc de café épuisé.

La fig. 4 est identique à la fig. 3, mais le tiroir est en position travail.

La fig. 5 est une figure schématique du corps seul indiquant les différents emplacements des distributeurs A, B, C, D, du robinet de décompression E et du clapet non retour 27.

La fig. 6 est une vue de dessus de la fig. 5.

La fig. 7 est une coupe brisée de la fig. 6 suivant les axes O, P, montrant la disposition du clapet non retour 27 et du robinet de décompression E et la fixation de l'obturateur 18, toutes les pièces étant en place sur le corps.

La fig. 8 montre schématiquement le circuit hydraulique 10 sur lequel on distingue:

a—pompe de type connu

b et c—électrovanne à 3 voies de type connu

d—électrovanne à 2 voies de type connu

e—un verre doseur d'eau électronique de type connu

f—une chaudière à échangeur de température de type connu, sur laquelle est directement fixé le corps 1

g—un clapet non retour de type connu.

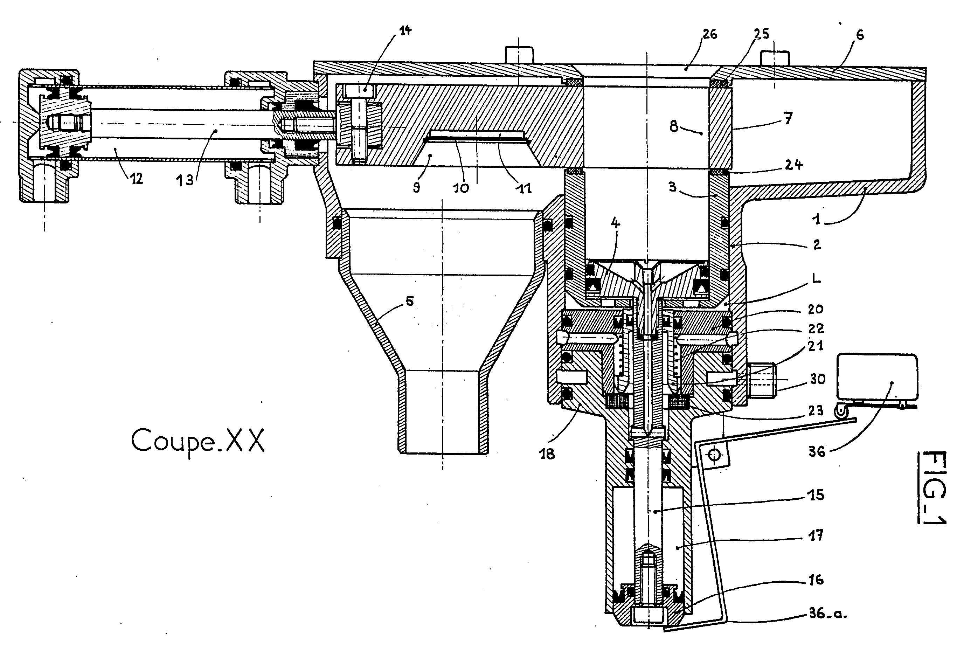

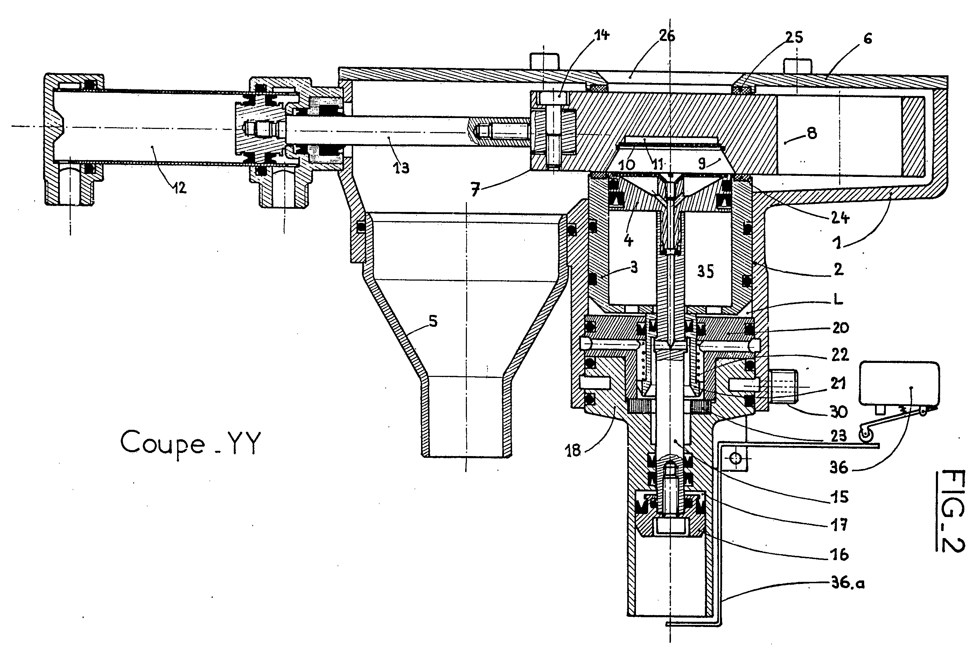

On voit sur les fig. 1 et 2 quele groupe se compose du corpsldans lequel est aménagé un cylindre qui reçoit un cylindre 3 formant le piston creux; à l'intérieur de ce cylindre coulisse un piston 4.

Parallèle à l'axe du piston 4 et à gauche sur les fig. 1 et 2, se trouve un entonnoir 5 qui reçoit le marc de café épuisé pour le diriger vers l'évacuation, la vidange.

Un couvercle 6 ferme le dessus du corps et ménage un logement dans lequel coulisse un tiroir 7; le tiroir 7 porte un alésage 8 qui en position repos fig. 1 est coaxial avec le piston 4. Sur la face inférieure du tiroir 7 est usiné un évidement 9 de forme tronconique, grande base vers le bas, un filtre 10 est fixé à une certaine distance du fond de cet évidement 9 de manière à former une chambre 11; en position travail cet évidement est coaxial avec le piston 4.

Le tiroir 7 reçoit son mouvement de translation par un vérin hydraulique de type connu à double effet 12 relié au tiroir 7 par la tige 13 et l'axe 14.

Le piston 4 est fixé sur une tige 15 qui porte à son extrémité inférieure un piston 16.

Le piston 16 coulisse dans un cylindre 17 aménagé dans la partie inférieure d'un obturateur 18 fermant le cylindre 2.

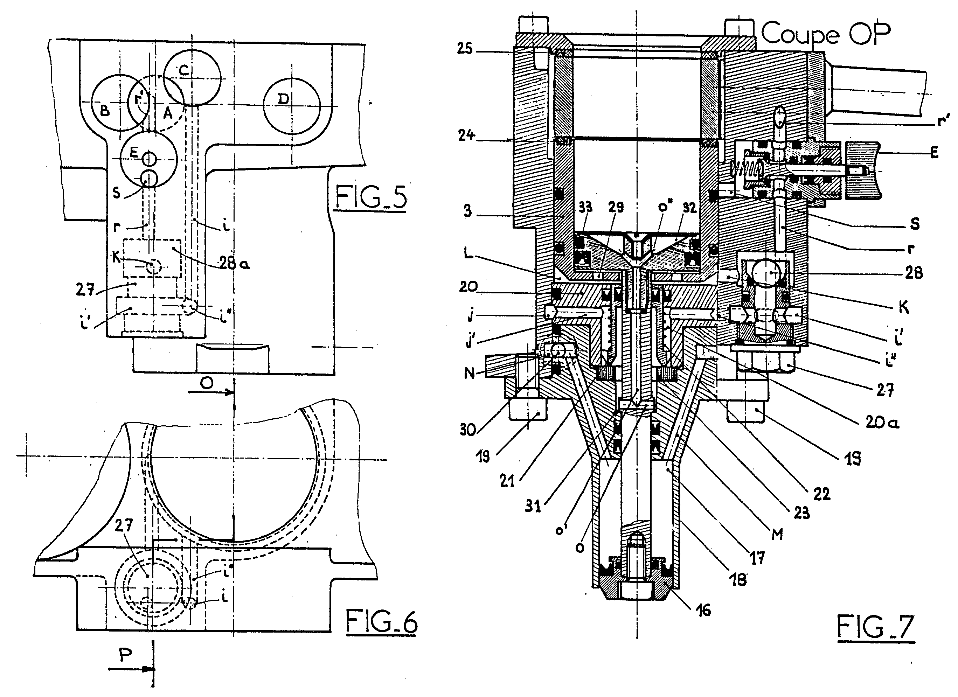

L'obturateur 18 est fixé au corps 1 par les vis 19 fig. 6; il maintient aussi en position une entretoise 20.

Un clapet 21 est logé dans une chambre 20a de l'entretoise 20; à l'intérieur de ce clapet 21 coulisse la tige 15 du piston 4; grâce à un ressort 22, le clapet 21 appuie d'une manière étanche sur un joint plat 23.

C'est entre un joint plat 24 situé sur le bord supérieur du cylindre 3 et un joint plat 25 fixé sous le couvercle 6 autour d'un alésage 26 coaxial avec le cylindre 3, que coulisse le tiroir 7.

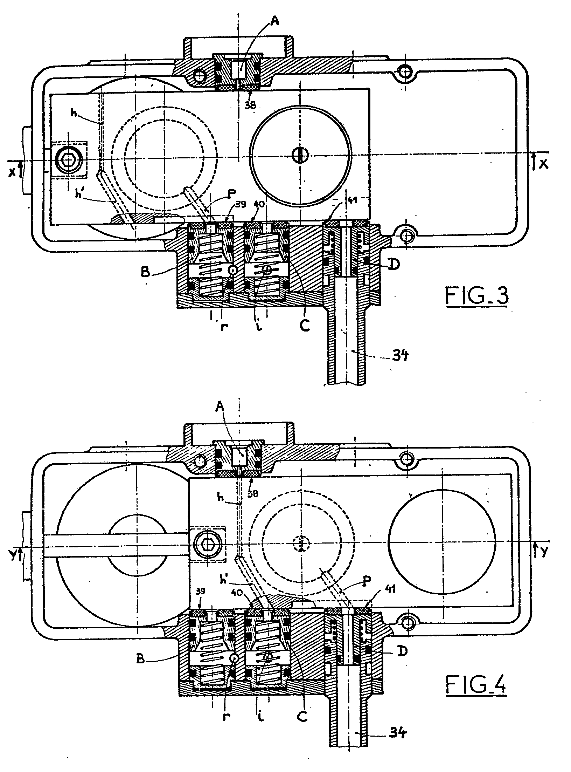

On voit sur les figures 3 et 4 les différents distributeurs:

En A—distributeur en communication directe avec une chaudière de type connu à échangeur de température.

en B—distributeur éjection marc et remise au point mort.

en C—distributeur d'entrée eau pour la montée du piston en position infusion (fig. 4 tiroir en position travail).

En D—Distributeur sortie café infusé. Le rôle de ces différents distributeurs sera expliqué plus en détail au cours de l'exposé ci-après:

L'eau de la chaudière f étant à la temperature idéale: par un contact électrique de type connu, on fait tomber une dose de café moulu délivrée par un système connu en soi, à l'intérieur du cylindre 3 au travers des alésages 26 et 8 respectivement du couvercle 6 et du tiroir 7; le même contact électrique a excité l'électrovanne qui délivre au verre doseur e une quantité d'eau électroniquement dosée par un système connu. Cette quantité obtenue l'électrovanne d est coupée, la pompe a est mise sous tension de même que l'électrovanne à 3 voies c.

L'eau sous pression débitée par la pompe, puisée dans le verre doseur e parvient au vérin 12 en 12a et au travers du clapet non retour g à l'échangeur de température f.

En position repos du tiroir 7 fig. 3 l'eau provenant de l'échangeur ne peut s'écouler, le distributeur A étant obturé par 1 le tiroir 7. L'eau arrive au vérin 12 en 12a et pousse le tiroir 7 vers la droite en position travail.

L'eau contenue dans le vérin, sur la face opposée de son piston sort en 12 b, passe au travers de l'électrovanne b qui, hors tension est passante dans le sens de la flèche bb et est aspirée par la pompe a.

En butée à fond de course, le vérin 12 a poussé le tiroir 7 en position travail; le conduit de section différentielle hh met alors en communication le distributeur A de l'échangeur f avec le distributeur C fig. 4.

L'eau sous pression du distributeur C, descend dans un conduit i fig. 5, 6 qui l'amène dans une gorge annulaire i' fig. 5 et 6 du clapet non retour 27, par le conduit i" à la gorge annulaire j fig. 7 et par les conduits j' fig. 7 de l'entretoise 20 au logement 20a du clapet 21 maintenu d'une manière étanche sur le joint 23 par le ressort 22.

L'eau sous pression n'ayant aucune issue de ce côté là repousse vers le haut une bille 28 du clapet non retour 27 passant dans ce sens et pénètre par un conduit K dans un espace annulaire L formé par le chanfrein du bord etérieur inférieur du cylindre 3. La paroi frontale inférieure du cylindre est percée de trous 29.

Sous l'action de la pression d'eau, le bord supérieur du cylindre 3 vient porter d'une manière étanche par l'intermédiaire d'un joint 24 autour de l'évidement 9 fig. 2, venu se placer en position travail coaxialement au cylindre 3. Par les trous 29 l'eau pénètre à l'intérieur du cylindre 3 et repousse le piston 4; celui-ci en montant entraîne par la tige 15 le piston 16 qui lui est solidaire. Dans son mouvement le piston 16 chasse l'eau contenue dans le cylindre 17 par des conduits M débouchant dans une gorge circulaire N, un mamelon 30 dirigeant l'eau à. travers l'électrovanne C, hors tension, passante dans le sens de la flèche aa vers la pompe a.

Dans son mouvement ascensionnel et en fin de course, lorsque le piston 4 affleure la base inférieure du tiroir 7, après avoir tassé la dose de mouture dans l'évidement 9, la tige 15, par un épaulement 31, entraîne le clapet 21 livrant ainsi le passage à l'eau chaude sous pression. Celle-ci, en provenance de l'échangeur et sous la poussée de la pompe a passe par des conduits o' o" jusqu'à une cavité 32 du piston 4 et au travers d'une grille de diffusion 33 qui la recouvre permettant l'infusion du café. Le Café s'écoulera dans la tasse par un conduit P débouchant dans la chambre 11, au-dessus du filtre 10 de l'évidement 9, venu en concordance, tiroir en position travail fig. 4, avec le distributeur D et son conduit 34.

Lorsque la quantité d'eau sélectionnée contenue dans le verre doseur e, est complètement aspirée par la pompe, un circuit électrique connu interrompt l'arrivée du courant à l'électrovanne c et met sous tension l'électrovanne b.

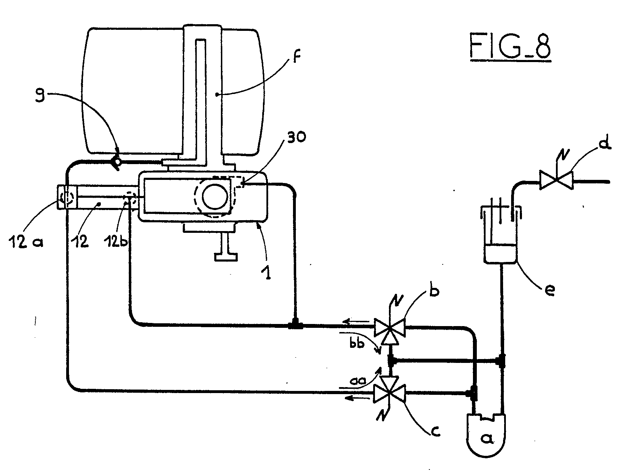

La pompe continuant à fonctionner, l'eau sous pression arrive au vérin 12 en 12b et le repousse vers la gauche, pour ramener le tiroir 7 en position repos fig. 4; l'eau contenue dans le vérin est aspirée par la pompe au travers de l'électrovanne C, hors tension, passante dans le sens de la flèche aa fig. 8; la pompe refoule aussi par le mamelon 30 fig. 7 dans la gorge annulaire N et les conduits M dans le cylindre 17 fig. 7; mais la présence du clapet non retour 27 fig. 7 s'opposant au passage de l'eau contenue dans la chambre 35 fig. 4 formée dans le cylindre 3 sous le piston 4; le piston 4 est donc maintenu en position haute fig. 2. En conséquence, le piston 16 solidaire du piston 4 par la tige 15 du piston 16 ne peut descendre.

L'évacuation de l'eau de la chambre 35 fig. 4 se fera par le conduit r aboutissant au distributeur B. fig. 4 lorsque le tiroir 7 bien parvenu en position repos mettra en concordance le conduit P de l'évidement 9 avec le dit distributeur B fig. 4.

Dans son mouvement de descente, le piston 16 fig. 2 entraînera le piston 4 en position basse.

Cette conception permet au tiroir 7 puisque la piston 4 affleure en cette position fig. 2 sa face inférieure, d'entraîner la totalité de la galette de café épuisé se trouvant dans l'évidement 9.

Le tiroir 7 parvenu en position repos fig. 3, l'eau contenue dans la chambre 35 fig. 2 s'évacue par le conduit K fig. 5, 6 et 7, par le conduit r ayant son origine dans la chambre 28a au-dessus de la bille 28 du clapet non retour 27 qui débouche en "r'" dans le distributeur B, de là par le conduit P qui aboutit dans la chambre 11 au dessus du filtre 10 de l'évidement 9; cette eau expulse l'intégralité du marc de café épuisé dans l'entonnoir 5 fig. 1 et lave le filtre 10 à contre-courant.

Le piston 16 arrivant à fond de course rencontre le levier 36a commandant le minirupteur 36 qui arrête la pomp. Le robinet E donne la faculté d'évacuer par le conduit S, lorsque l'on agit sur lui, en cas d'erreur de dosage de mouture l'eau contenue dans la chambre 35 fig. 2 autorisant le retour du tiroir 7 en position repos et le démarrage d'un nouveau cycle.

Des portées d'étanchéité 38, 39, 40 et 41 à faible frottement sont disposées respectivement au droit des distributeurs A, B, C et D; s'appliquant contre le tiroir 7 elles servent aussi de guidage à son mouvement transversal.

**Revendications**

1. Dispositif automatique pour l'infusion de café express ou autres boissons similaires dans lequel un tiroir (7) disposé au-dessus d'un cylindre (3) peut occuper deux positions, le tiroir (7) présentant un alésage (8) d'admission de la dose de mouture traversant l'épaisseur du tiroir (7) et pouvant être disposé dans une position coaxialement au cylindre (3), un piston (4) étant monté coulissant dans ce dernier caractérisé en ce que:

— une chambre de réception d'une dose de mouture est délimitée par la surface latérale intérieure du cylindre (3) et la surface supérieure du piston (4) en position basse, le tiroir étant en position de repos dans laquelle l'alésage (8) est coaxial au cylindre (3) permettant ainsi le passage de la dose de mouture dans ladite chambre de réception;
— une chambre d'infusion est délimitée par un trou borgne (9) disposé sur la surface inférieure du tiroir (7) et la face frontale supérieure du piston (4) en position haute, le tiroir (7) étant en position de travail, position dans laquelle le trou borgne (9) coiffe le cylindre (3) et est coaxial avec ce dernier, la surface frontale du piston (4) affleurant la surface inférieure du tiroir (7), l'eau étant injectée dans la chambre d'infusion, le piston (4) restant dans cette position haute pendant l'infusion et le retour du tiroir (7) à sa position de repos, ce dernier y emportant la galette de marc épuisé où elle est éjectée, le piston (4) retournant à sa position basse pour permettre le démarrage d'un nouveau cycle.

2. Dispositif automatique pour l'infusion de boissons selon la revendication 1 caractérisé en ce que la chambre d'infusion est alimentée en eau de bas en haut au travers d'une grille de diffusion (33) disposée sur le piston (4).

3. Dispositif automatique pour l'infusion de boissons selon la revendication 2 caractérisé en ce que le cylindre (3) forme piston creux, sa surface frontale supérieure étant munie d'un joint plat (24) d'étancheité, appliqué par la pression hydraulique d'infusion contre le tiroir (7), uniquement pendant l'infusion.

4. Dispositif automatique pour l'infusion de boissons selon l'une des revendications 1 à 3 caractérisé en ce que, en position de travail, le tiroir (7), percé d'un conduit (h, h'), assure en correspondance avec les distributeurs (A) et (C), la distribution d'eau chaude pour l'infusion du café, un conduit (P) assurant, en correspondance avec le distributeur (D), la distribution de boisson infusée et en ce que, en position de repos, le conduit (P) en correspondance avec le distributeur (B) assure la distribution d'eau pour l'éjection de marc épuisé et pour le nettoyage du filtre (10) et de la chambre d'infusion.

5. Dispositif automatique pour l'infusion de boissons selon l'une des revendications 1 à 4 caractérisé en ce que l'évidement (9) est tronçonique.

6. Dispositif automatique pour l'infusion de boissons selon l'une des revendications 1 à 5 caractérisé en ce que des portées d'étancheité (38, 39, 40, 41) à faible coefficient de frottement sont disposées respectivement au droit des distributeurs (A, B, C, D) s'appliquant contre le tiroir (7) et servant de guidage à son mouvement transversal.

7. Dispositif automatique pour l'infusion de boissons selon l'une des revendications 1 à 6 caractérisé en ce qu'un clapet (21) d'admission d'eau pour l'infusion est ouvert par le piston (4) en fin de course haute.

8. Dispositif automatique pour l'infusion de boissons selon la revendication 7 caractérisé en ce que le clapet (21) ouvert, le volume d'eau sous le piston (4) est maintenu par un clapet non retour (27).

9. Dispositif automatique pour l'infusion de boissons selon la revendication 1 caractérisé en ce que le tiroir (7) est muni d'un vérin (12) déplacé par l'eau aspiré sur une face du piston du vérin (12) et refoulé sur l'autre face.

**Patentansprüche**

1. Automatische Vorrichtung zur Infusion von Espressokaffee oder ähnlichen Getränken, in der eine über einem Zylinder (3) angebrachte Lade (7) zwei Stellungen einnehmen kann, eine Einlaßbohrung (8) für das Mahlgut, die Lade (7) von oben nach unten durchziehend, in eine koaxiale Stellung zum Zylinder (3) gebracht werden kann, mit einem montierten, durch diesen Zylinder gleitenden Kolben (4), dadurch charkterisiert, daß:

— Eine Empfangskammer für die Mahlgutdosis ist durch die innere Seitenfläche des Zylinders (3) und der oberen Fläche des Kolbens (4) in unterer Stellung abgegrenzt, die Lade ist in Ruhestellung, in welcher die Ausbohrung (8) koaxial zu Zylinder (3) steht und gibt so den Weg frei für die Mahlgutdosis zur sogenannten Empfangskammer;
— eine Infusionskammer ist abgegrenzt durch ein Grundloch (9), das sich an der unteren Fläche der Lade (7) befindet und der oberen Vorderfront des Kolbenes (4) in oberster Stellung. Während die Lade (7) in Arbeitsstellung ist, in der das Grundloch (9) den Zylinder (3) bedeckt und koaxial mit letzterem ist, die frontale Oberfläche des Kolbens (4) bündig mit der unteren Fläche der Lade (7) ist und das Wasser in die Infusionskammer eingespritzt wird, der Kolben in dieser oberen Stellung während der Infusion bleibt und der Rückkehr der Lade (7) in Ruhestellung, letztere dann den Fladen dorthin mitnimmt, wo er ausgeworfen wird, während der Kolben (4) seine niedrige Stellung einnimmt, um den Beginn eines neuen Vorgangs zu ermöglichen.

2. Automatische Vorrichtung zur Infusion von Getränken nach Forderung 1 dadurch charakterisiert, daß die Infusionskammer von unten nach oben mit Wasser durch das auf Kolben (4) angebrachte Verteilungsrost (33) versorgt wird.

3. Automatische Vorrichtung zur Infusion von Getränken nach Forderung 2 dadurch charakterisiert, daß der Zylinder (3) einen hohlen Kolben bildet, dessen frontale obere Fläche mit einer flachen Dichtungsscheibe (24) ausgestattet ist, welche durch den hydraulischen Infusionsdruck an die Lade (7) nur während der Infusion angedrückt wird.

4. Automatische Vorrichtung zur Infusion von Getränken nach einer der Forderungen 1—3 dadurch charakterisiert, daß die Lade (7) in Arbeitsstellung, durchbohrt von einem Kanal (h, h'), eine Verbindung mit den Verteilern (A)+(C) sichert, die Verteilung des heißen Wassers für den Kaffeeaufguß und ein Kanal (P) in Verbindung mit Verteiler (D), die Verteilung des infusierten Getränkes sichert und dadurch, daß in Ruhestellung der Kanal (P) in Verbindung mit dem Verteiler (B) die Verteilung des Wassers zum Ausstoß des Kaffeesatzesund zur Reinigung des Filters (10) und der Infusionskammer sichert.

5. Automatische Vorrichtung zur Infusion von Getränken nach einer der Forderungen 1—4, charakterisiert dadurch, daß die Aussparung kegelstumpfartig ist.

6. Automatische Vorrichtung zur Infusion von Getränken nach einer der Forderungen 1—5, charakterisiert dadurch, daß Dichtungsauflageflächen mit niedrigem Reibbeiwert (38, 39, 40, 41) jeweils vertikal zu den Verteilern A, B, C und D angeordnet sind, sich an der Lade (7) andrücken und der Leitung ihrer seitlichen Bewegung dienen.

7. Automatische Vorrichtung zur Infusion von Getränken nach einer der Forderungen 1—6, charakterisiert dadurch, daß eine Infusionswassereinlaßklappe (21) durch den Kolbe (4) in oberer Endstellung geöffnet wird.

8. Automatische Vorrichtung zur Infusion von Getränken nach Forderung 7 dadurch charakterisiert, daß wenn die Klappe (21) offen steht, die Wassermenge unter dem Kolben (4) durch eine Rückschlagklappe (27) aufgehalten wird.

9. Automatische Vorrichtung zur Infusion von Getränken nach Forderung 1 dadurch charakterisiert, daß die Lade (7) die mit einem Druckzylinder (12) versehen ist, durch das an einer Seite des Kolbens des Druckzylinders (12) eingelassen und an der anderen Seite ausgelassenen Wassers bewegt wird.

**Claims**

1. Automatic device for the infusion of expresso coffee or other similar beverages in which a drawer (7) places above a cylinder (3) can hold two positions, the drawer (7) having an opening (8) for the measure of grinding coffee which goes through the depth of the drawer (7) and can be placed in a position co-axial with the cylinder (3), a piston (4) sliding into the latter when raised. It is characterised by:

— A reception chamber for the measure of grinding coffee is delimited by the interior lateral surface of the cylinder (3) and the upper surface of the piston (4) in lower position, the drawer being in rest position in which the opening (8) is co-axial with the cylinder (3), thus allowing the introduction of the measure of grinding coffee into the aforementioned reception chamber.

— An infusion chamber is delimited by a blind hole (9) placed on the lower surface of the drawer (7) and the frontal upper side of the piston (4) in upper position, the drawer (7) being in work position, position in which the blind hole (9) caps the cylinder (3 and is co-axial with this latter, the frontal surface of the piston (4) touching the lower surface of the drawer (7) the water being injected into the infusion chamber, the piston (4) staying in this upper position during the infusion off and ejecting the cake of used grounds, the piston (4) returning to its lower position so that a new cycle can begin.

2. Automatic device for the infusion of beverages in accordance with Claim (1) in that the water is fed into the infusion chamber from the bottom towards the top through a diffusion grid (33) placed on a piston (4).

3. Automatic device for the infusion of beverages in accordance with (Claim 2) in that the cylinder (3) forms a hollow piston, its upper frontal surface having a watertight gasket applied by the hydraulic pressure of infusion against the drawer (7) only during infusion.

4. Automatic device for the infusion of beverages in accordance with Claim (1 to 3) in that, in work position, the drawer (7) bored by a pipe (h, h') ensures connection with distributors (A) and (C), the distribution of hot water for infusion of the coffee, a pipe (P) ensuring together with the distributor (D) the distribution of beverage infused and in that in rest position, the pipe (P) in connection with the distributor (B) ensures distribution of water for the ejection of the used grounds and for cleaning the filter (10) and infusion chamber.

5. Automatic device for the infusion of beverages in accordance with one of the Claims (1 to 4) in that the hollow (9) is shaped like a truncated cone.

6. Automatic device for the infusion of beverages in accordance with one of the Claims (1 to 5) in that the low friction watertight bearings (38, 39, 40, 41) are placed straight to the distributors (A, B, C, D), maintained on the drawer (7) and serving as guides for its transversal movement.

7. Automatic device for the infusion of beverages in accordance with one of the Claims (1 to 6) in that a valve (21) permitting entry of water for the infusion is opened by the piston (4) at the end of its upward movement.

8. Automatic device for the infusion of beverages in accordance with Claim (7) in that when the valve (21) is open, the volume of water under the piston (4) is maintained by a non-return valve (27).

9. Automatic device for the infusion of beverages in accordance with Claim (1) in that the drawer (7) is equipped with a jack (12) and displaced by the water, sucked out on one side of the piston of the jack (12) and driven over to the other side.

FIG_1
Coupe.XX
1
2
L
20
22
21
30
23
36
15
17
16
36_a
6
7
24
25
26
8
3
4
18
11
10
9
5
14
13
12

FIG_2
Coupe_YY
1
2
3
4
5
6
7
8
9
10
11
12
13
14
15
16
17
18
20
21
22
23
24
25
26
30
35
36
36.a
L

A
38
h
h'
x
X
P
39
40
41
B
D
r
i
C
34
FIG_3
A
h
38
y
Y
h'
P
39
40
41
B
D
r
i
C
34
FIG_4

B
r'
A
C
D
E
S
r
i
K
28a
27
i'
i"
FIG_5
O
27
i"
i
FIG_6
P
Coupe OP
25
24
3
33
29
o"
32
L
20
j
j'
N
30
19
21
31
o'
o
r'
E
S
r
28
K
i'
i"
27
20a
19
22
23
M
17
18
16
FIG_7

FIG_8
f
g
30
d
12 a
12
12b
1
e
b
bb
aa
c
a